# EUROPEAN PATENT SPECIFICATION

(11) **EP 4 044 799 B1**
(45) Date of publication and mention of the grant of the patent: **25.02.2026**
(21) Application number: 20875740.1
(22) Date of filing: 15.10.2020
(51) Int. Cl.: A01K 61/13, A01K 61/60, A01K 79/00, A01K 61/95

(54) **DEVICE FOR RELOCATING FISH WITHIN A RECEPTACLE AND METHOD FOR RELOCATING THE FISH**
VORRICHTUNG ZUM UMPOSITIONIEREN VON FISCHEN IN EINEM BEHÄLTER UND VERFAHREN ZUM UMPOSITIONIEREN DER FISCHE
DISPOSITIF DE RELOCALISATION DE POISSONS À L'INTÉRIEUR D'UN RÉCEPTACLE ET PROCÉDÉ DE RELOCALISATION DES POISSONS

(30) Priority: 15.10.2019 NO 20191231
(43) Date of publication of application: 24.08.2022
(73) Proprietor: Mowi ASA, 5035 Bergen (NO)
(72) Inventor: GRAVDAL, Eirik, 5235 Rådal (NO)
(74) Representative: Håmsø Patentbyrå AS
(86) International application number: PCT/NO2020/050255
(87) International publication number: WO 2021/075978

(56) References cited:
- WO-A1-2015/099540
- WO-A1-2016/134128
- CN-U- 207 070 760
- GB-A- 2 571 926
- NO-L- 890 628
- NO-L- 890 628
- US-A- 4 501 227

## Description

This invention relates to management of farmed fish. More particularly the invention relates to management of fish in receptacle such as a floating fish pen or a land-based fish tank. Said fish pen comprises an enclosure for the fish. Even more particularly the invention relates to positioning a crowding net within the receptacle and to fasten side edges of the crowding net to a wall of the receptacle. Thereby the crowding net is turned completely inside out when the crowding net is displaced from one side of the receptacle to the opposite side of the receptacle. At least one passage lets the fish swim from one side of the crowding net to the opposite side of the crowding net. The passage may in one embodiment be located between the crowding net and the receptacle. The passage may in an alternative embodiment be located in a wall of the crowding net between the side edges of the crowding net. The fish is forced to swim through the passage as the available volume for the fish is diminished by the displacement of the crowding net from one side to the other side of the receptacle.

During the production cycle of farmed fish from release of fish into the receptacle and until transfer to a new receptacle or to harvesting, there may arise a need for handling the fish and crowding the fish. Such handling may comprise counting the fish, grading of the fish e.g. according to size, and treatment for diseases and parasites. Such handling may involve repeatedly crowding of the fish by a crowding net until all fish in the enclosure have been handled and pumping the fish through a fish pump. Pumping means elevating the fish above sea level. Such handling is stressful to the fish and may be lethal for vulnerable individuals.

Handling of the fish is time consuming and requires manpower. In many cases it also involves mobilization of a vessel, such as a well boat or a specially designed vessel for treatment of fish for e.g. sea lice.

Patent application NO19890628 discloses a fish pen provided with a catch net positioned inside the fish pen. The catch net is provided with a central grading grid. The catch net is initially covering approximately half the internal circumference of the fish pen. Buoyancy elements at a top portion and sinking elements at the bottom portion make the catch net float approximately vertical in the water column. The catch net is simultaneously hauled at the ends of the top portion and the ends of the bottom portion towards the opposite side of the fish pen. Thereby the catch net act as a purse seine and the fish is forced to swim towards the grading grid.

The invention has for its object to remedy or to reduce at least one of the drawbacks of the prior art, or at least provide a useful alternative to prior art.

There is a need for gentle and non-stressful methods for handling fish in a receptacle such as a land-based tank or an enclosure in a fish pen. There is also a need for equipment and methods that reduce the number of manhours spent on handling the fish and more efficient use of vessels.

The invention is defined by the independent patent claims. The dependent claims define advantageous embodiments of the invention.

A fish pen comprises an enclosure to raise fish within a confined water volume. The enclosure may comprise a net and water currents may pass through the net. The upper portion of the net may have a cylindrical shape and the lower portion of the net may have a conical shape. The upper portion forms a side wall of the enclosure. The lower portion forms a bottom of the enclosure. In an alternative embodiment the whole enclosure is conically shaped. When the enclosure is conically shaped, the net forms a side wall from the water surface to the apex and there is no bottom. The invention may be used in an enclosure with a side wall and a bottom, as well as in an enclosure formed with a side wall, only. The invention may be used in a land-based tank. The tank may have a circular cross-section, a square cross-section or other suitable cross-sections such as an octagonal cross-section.

In a first aspect the invention relates more particularly to a fish pen comprising a buoyancy member encircling an enclosure for raising fish. The enclosure comprises a side wall and possibly a bottom and the fish pen comprises a crowding net positioned within the enclosure. The crowding net forms a top edge. The top edge is provided with buoyancy means. The crowding net forms further two side edges and possibly a bottom edge. The length of the crowding net between the two side edges is larger than a diameter of the enclosure. The crowding net is fastened to the side wall along the side edges.

The crowding net is arranged within the enclosure such that the entire crowding net may be turned completely inside out by displacing the top edge from one side to the opposite side of the enclosure.

In an enclosure provided with a bottom, the crowding net may be fastened to the bottom at a portion of the bottom edge between the side edges. In an alternative embodiment the crowding net may be fastened to the bottom at the bottom edge between the side edges, i.e. along substantially the whole bottom edge.

The crowding net may comprise a bottom portion, and the bottom portion may form a false bottom above the enclosure's bottom. In an alternative embodiment the bottom edge of the crowding net touches the bottom. In this embodiment the bottom edge is provided with a weight rope or similar such that the bottom edge rests on the bottom of the enclosure when the crowding net is positioned at the periphery of the enclosure. In addition, the bottom edge rests on or at least touches the bottom, or alternatively most of the bottom, of the enclosure when the crowding net is positioned in an S-form, as seen from above, in a mid-position within the enclosure. Only the deepest part at an apex of the enclosure's bottom may be free below the bottom edge.

The crowing net may be formed as a cone cut in half. In this embodiment the crowing net is provided with two side edges that meet in an apex. Such a crowding net is suitable for use within a conically shaped enclosure. The apex of the crowding net is positioned close to the apex of the conically shaped enclosure. Portions of the side wall of the crowding net may abut the side wall of the enclosure when the crowding net is positioned at the periphery of the enclosure.

A slit may be formed between at least one of the side edges and the side wall. The slit may be provided with means for forming a blocking means to the fish, and the slit may be formed with at least one fixed passage for the fish. The slit may be formed with at least one displaceable passage for the fish. The side edges may be fastened by a zipper arrangement to the means forming a blocking means.

The fish pen may comprise displacing means for displacing the top edge from one side of the enclosure to the opposite side of the enclosure. The displacing means may comprise at least one pair of opposing winches and a rope between the winches, and the rope may be connected to the top edge by an attachment. In an alternative embodiment the displacing means may comprise an arrangement comprising one winch, an arrangement of sheaves and opposing sheaves and a rope, and the rope may be connected to the top edge by an attachment at a middle portion of the top edge. In an alternative embodiment the displacing means may comprise at least one actuator provided with an actuator arm, said actuator arm may be connected to the top edge close to the side edge. In one embodiment, the displacing means may comprise a combination of the previous embodiments, namely a winch, a rope and at least one actuator arm.

In a second aspect the invention relates more particularly to a method for displacing fish from one side of a crowding net to the opposite side of the crowding net. The method comprises the steps of:
- providing a receptacle for fish;
- providing a crowding net as described above which forms a top edge, said top edge is provided with buoyancy means, two side edges and possibly a bottom edge, and the length of the crowding net between the two side edges is larger than a diameter of the receptacle;
- fasten the crowding net to a side wall of the receptacle along the side edges
- positioning the crowding net along half the circumference of the receptacle;
- slowly displacing the crowding net towards the opposite half circumference of the receptacle so that the crowding net is turned inside out; and
- letting the fish escape from a slowly reduced water volume at one side of the crowding net to a slowly enlarged water volume at the opposite side of the crowding net through a passage.

The passage may be located in a slit between the side wall and the side edge. The passage may be located in the crowding net between the side edges and in a wall of the crowding net.

The invention has been described in combination with floating fish pens. The skilled person will understand that the invention is suitable for use in land-based tanks with rigid walls and a rigid bottom. The skilled person will know how to adapt the present disclosure to fit in a tank with rigid walls and a rigid bottom.

In the following are described examples of preferred embodiments illustrated in the accompanying drawings, wherein:
- Fig. 1: shows in a schematic and partly sectioned perspective view a fish pen with a crowding net according to the invention;
- Fig. 2: shows schematically in cross section the fish pen with the crowding net in a first embodiment;
- Fig. 3: shows schematically in cross section the fish pen with the crowding net in a second embodiment;
- Figs. 4A-B: show a schematic plan view of a fish pen with the same crowding net indicated in two positions, and in two embodiments;
- Figs. 5A-F: show schematically a location of a passage in a slit between a side wall in an enclosure and a side edge of the crowding net;
- Figs. 6A-B: show in a schematic and partly sectioned perspective view the fish pen with the crowding net in a third embodiment, the crowding net being shown in two positions;
- Fig. 7: shows in a perspective view from below a detail of the passage in the slit;
- Figs. 8A-C: show schematically a design of the passage and position of the passage in three different embodiments;
- Fig. 9: shows a schematic plan view of the fish pen with displacing means in a first embodiment;
- Fig. 10: shows a schematic plan view of the fish pen with displacing means in a second embodiment;
- Fig. 11: shows buoyancy means of the crowding net in a first embodiment;
- Fig. 12: shows buoyancy means of the crowding net in a second embodiment;
- Fig. 13: shows in a cross-sectional view the same as figure 12;
- Fig. 14: shows in more detail a fragmentary section of a top edge of the crowding net; and
- Figs. 15A-D: show schematically in sequence a relocation of fish in the fish pen through the passage in the slit.

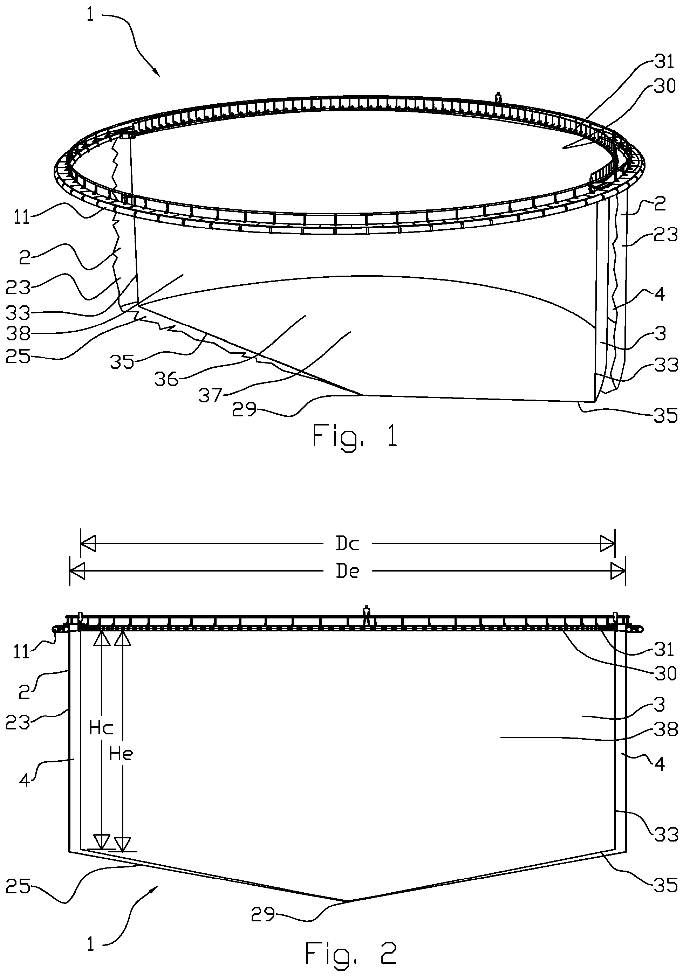

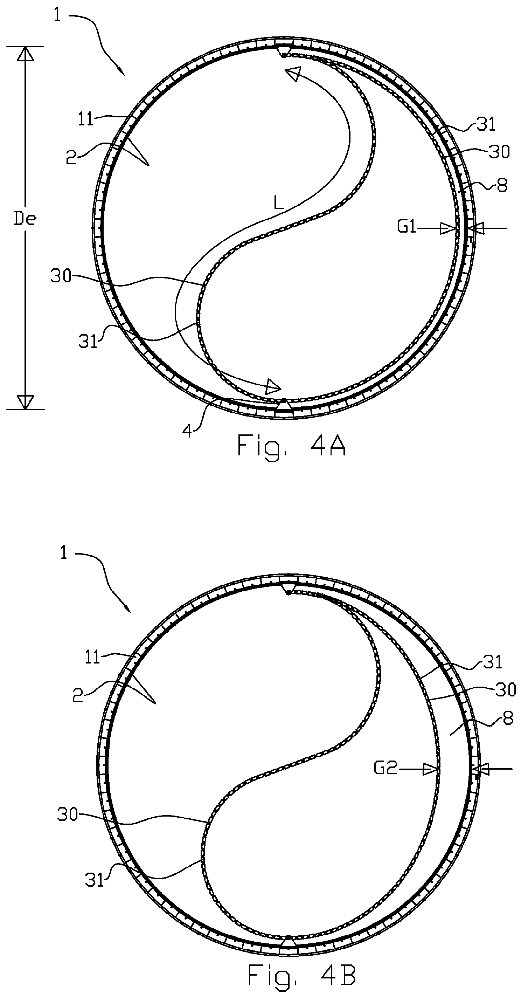

In the drawings, the reference numeral 1 indicates a fish pen. The fish pen 1 comprises a buoyancy member 11 and an enclosure 2 for raising fish 9. The buoyancy member 11 encircles the enclosure 2. The enclosure 2 comprises a side wall 23 and a conically shaped bottom 25 as shown in figures 1 to 3 and figures 6A-B. A crowding net 3 is positioned within the enclosure 2. The crowding net 3 forms a top edge 30 and said top edge 30 is provided with buoyancy means 31 to keep the crowding net 3 afloat. The crowding net 3 further forms a wall 38 with two side edges 33, and a bottom edge 35. The length L of the crowding net 3 between the two side edges 33 is larger than the diameter De of the enclosure 2 (see figure 4A). The crowding net 3 is fastened to the side wall 23 along the side edges 33. In some embodiments the crowding net 3 is fastened to the bottom 25 at a portion of the bottom edge 35. In other embodiments the crowding 3 is not fastened to the bottom 25.

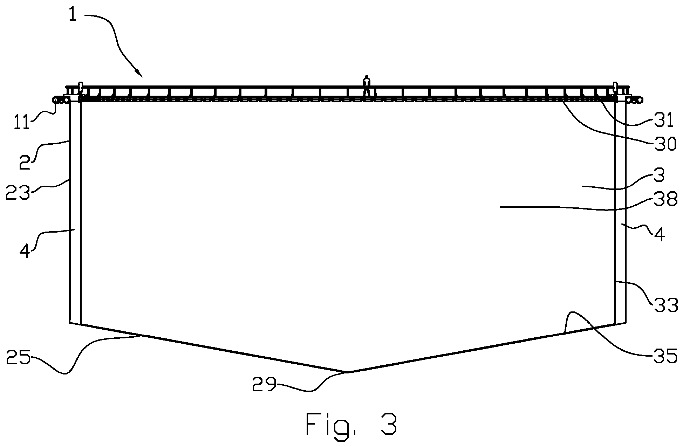

The crowding net 3 comprises a bottom portion 36. The bottom portion 36 may in one embodiment form a false bottom 37 above the enclosure's 2 bottom 25 as best seen in figure 2. In an alternative embodiment the crowding net 3 is fastened to the bottom 25 along the full length of the bottom edge 35 as seen in figure 3. The crowding net 3 may be fastened to the bottom 25 by sewing.

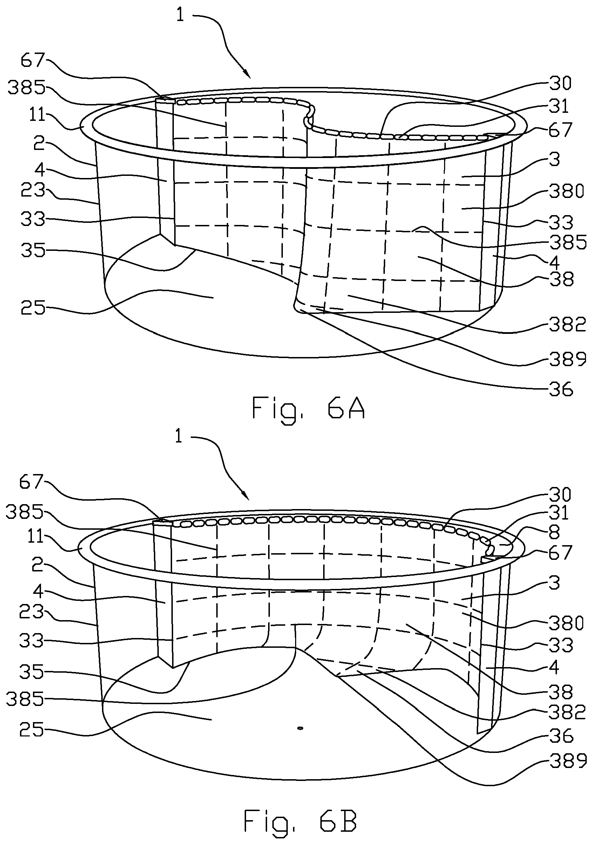

In one embodiment shown in figures 6A-B the wall 38 of the crowding net 3 is composed of an upper rectangle 380 and a lower triangle 382 as best seen in figure 6B. An apex 389 of the triangle 382 is pointing downwards. For better understanding of figures 6A-B, the shape of the wall 38 is indicated by dotted contour lines 385.The crowding net 3 is provided with a weight rope or similar (not shown) along the bottom edge 35. The depth of the crowding net's 3 edge 35 of the rectangle 380 is in this embodiment larger than the depth of the side wall 23. The depth of the bottom edge 35 of the triangle 382 is larger than the depth of the conically shaped bottom 25. The effect is that the crowding net 3 rests on or at least touches the bottom 25 of the enclosure 2 at all positions, especially at the mid-position shown in figure 6B. The bottom edge 35 will skid along or sweep the bottom 25 when the crowding net 3 is displaced within the enclosure 2, and there is no passage for fish 9 under the edge 35.

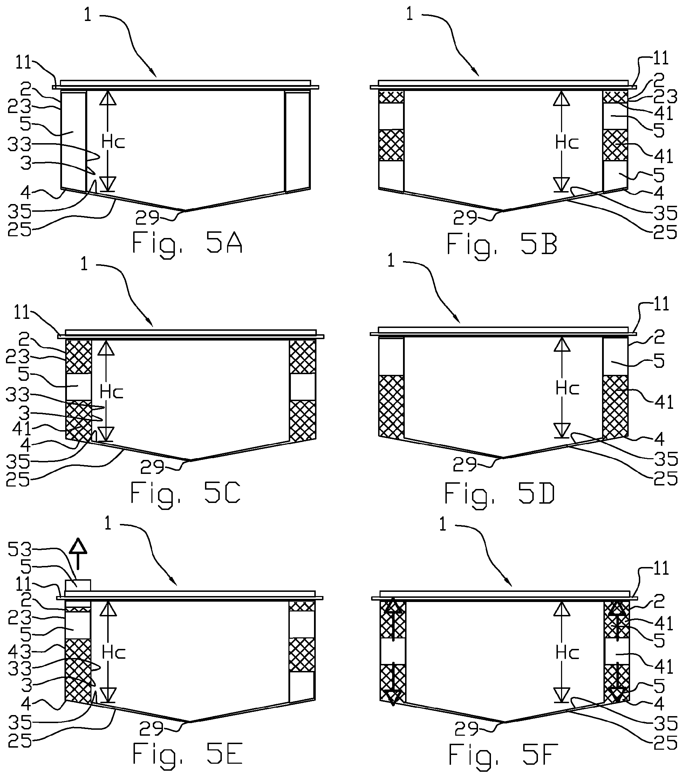

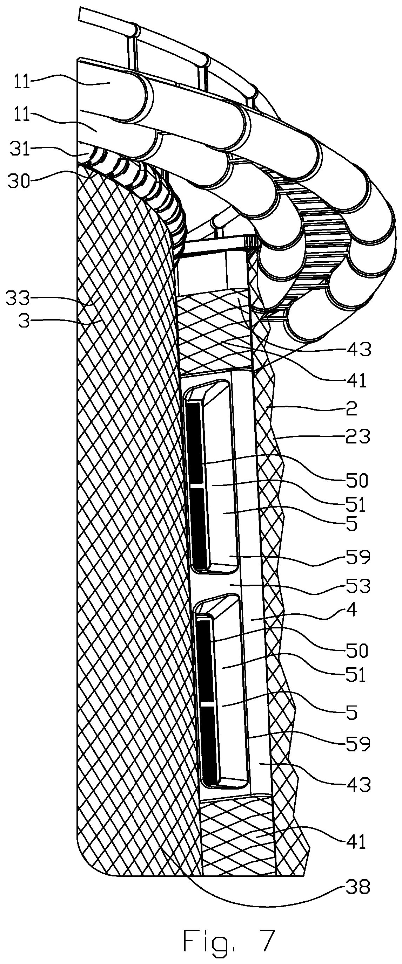

At least one of the side edges 33 is fastened to the side wall 23 with some distance to form a slit 4 between the side wall 23 and the side edge 33. The side edges 33 may be fastened with a zipper arrangement. The slit 4 may be provided with blocking means to the fish. At least one passage 5 for fish 9 is positioned within the slit 4. The passage 5 may extend the full height Hc of the side edge 33 as seen in figure 5A. The passage 5 may extend part of the full height Hc as shown in figures 5B-F and 7, and the remaining part of the slit 4 is blocked with a netting 41 or similar blocking means as best seen in fig-ure 7.

There may be several passages 5 in one slit 4 as shown in figures 5B, 5E and 7. The passage 5 may be fixed or it may be vertically displaceable within the slit 4 as shown in figures 5E and 5F. The slit 4 may be provided with a guide 43 and the passage 5 may be arranged in a cassette 53. The cassette 53 is vertically slidable along the guide 43. The cassette 53 may be pulled out of the guide 43 for cleaning as seen in figure 5E. The cassette 53 may enter the slit 4 on the guide 43.

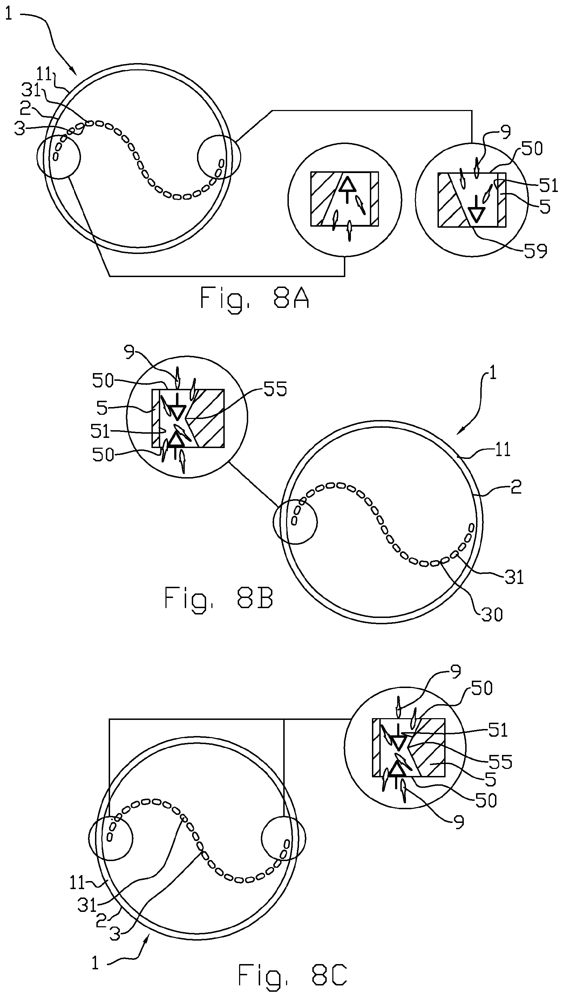

The passage 5 is provided with a gate 51 and the gate 51 forms, in one embodiment, an entrance 50 and an outlet 59 as seen in figures 7, 8A-C. The entrance 50 may be wider than the outlet 59. The gate 51 may be provided with means (not shown) which allow the fish 9 to swim through the gate 51 from the entrance 50 to the outlet 59, but not in the opposite direction. The gate 51 may be provided with a temporary closing means (not shown) that blocks the gate 51 for passing of the fish 9.

In an alternative embodiment the gate 51 is provided with a constriction 55 as seen in figures 8B and 8C. In this embodiment the passage 5 is adapted for the fish 9 to swim through the gate 51 in both directions.

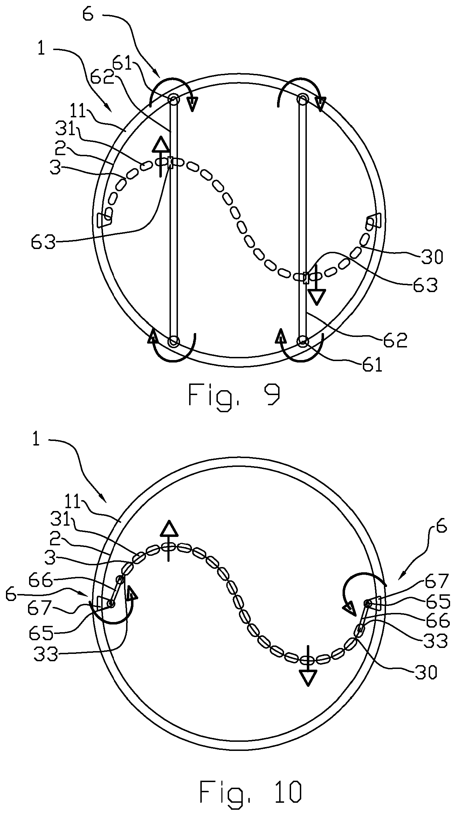

The pen 1 is provided with displacing means 6 for displacing the crowding net 3 from one side of the enclosure 2 to the opposite side of the enclosure 2. In one embodiment the displacing means 6 may comprise winches 61 on opposite sides of the enclosure 2. A rope or wire 62 connects two opposing winches 61. The rope 62 is connected to the top edge 30 by an attachment 63. Preferably in this embodiment, the displacing means 6 comprises two pairs of winches 61 as seen in figure 9. In an alternative embodiment, the displacing means 6 comprises an actuator 65. An actuator arm 66 is connected to the top edge 30 close to the side edge 33. The actuator 65 is connected to the buoyancy member 11 by a bracket 67. Preferably the displacing means 6 comprises two actuators 65. One actuator 65 is positioned close to one side edge 33 and the other actuator 65 is positioned at the opposing side edge 33 as seen in figure 10. In an alternative embodiment (not shown) the displacing means may comprise an arrangement comprising one winch, an arrangement of sheaves and opposing sheaves and a rope, and the rope may be connected to the top edge by an attachment at a middle portion of the top edge. In one embodiment (not shown), the displacing means may comprise a combination of the previous embodiments, namely a winch, a rope and at least one actuator arm.

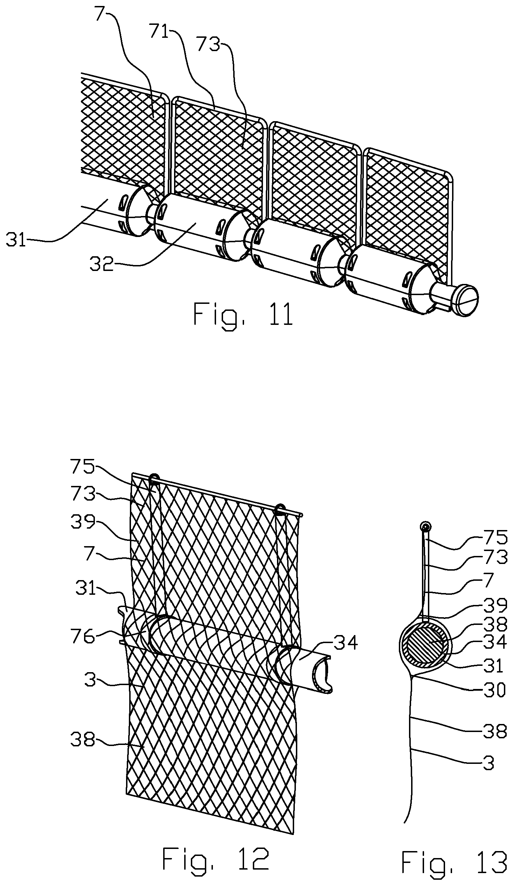

The top edge 30 and the buoyancy means 31 are shown in more detail on figures 11 to 14. The buoyancy means 31 is shown in a first embodiment in figure 11. The buoyancy means 31 may comprise chained buoyancy elements 32. The top edge 30 (not shown in figure 11) is fastened to the chained buoyancy elements 32. The chained buoyancy elements 32 carry a fence 7. The fence 7 is known as a jump net and comprises a plurality of fence frames 71 and a fence member 73. The fence member 73 may comprise a net. The buoyancy means 31 is shown in a second embodiment in figures 12 and 13. The buoyancy means 31 may comprise a tube 34. The top edge 30 is fastened to the tube 34. The tube 34 carries the fence 7. In this embodiment the fence 7 may comprise a plurality of fence pales 75. A fence pale 75 is shown fastened to the tube 34 by a clamp 76. The fence member 73 may be an upper portion 39 of the crowding net 3, or an individual net. The tube 34 may be filled with a floating means 38 such as a gas filled expanded plastic material.

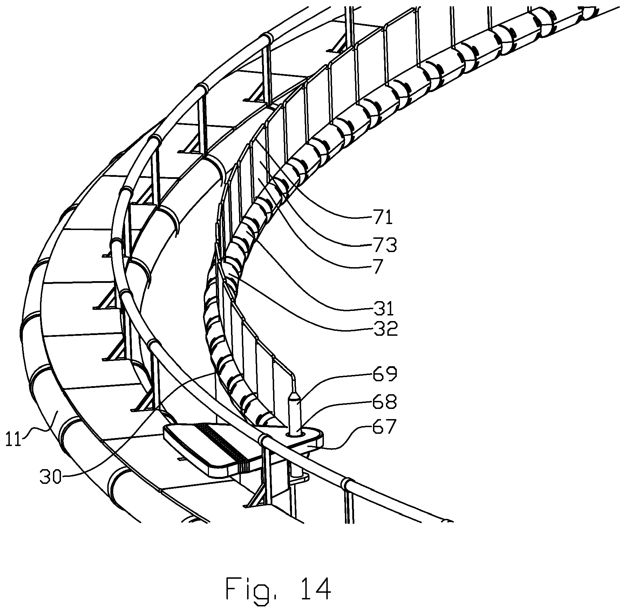

The buoyancy means 31 is in one embodiment pivotally connected to the buoyancy member 11 by the bracket 67. The bracket 67 forms a hinge 68 that supports a hinge pin 69 as seen in figure 14. The buoyancy means 31 is connected to the hinge pin 69. The crowding net 3 may at its opposing top edge 30 ends be attached to opposing hinge pins 69. The distance Dc between the opposing hinge pins 69 is less than the diameter De of the enclosure 2 as seen in figure 2.

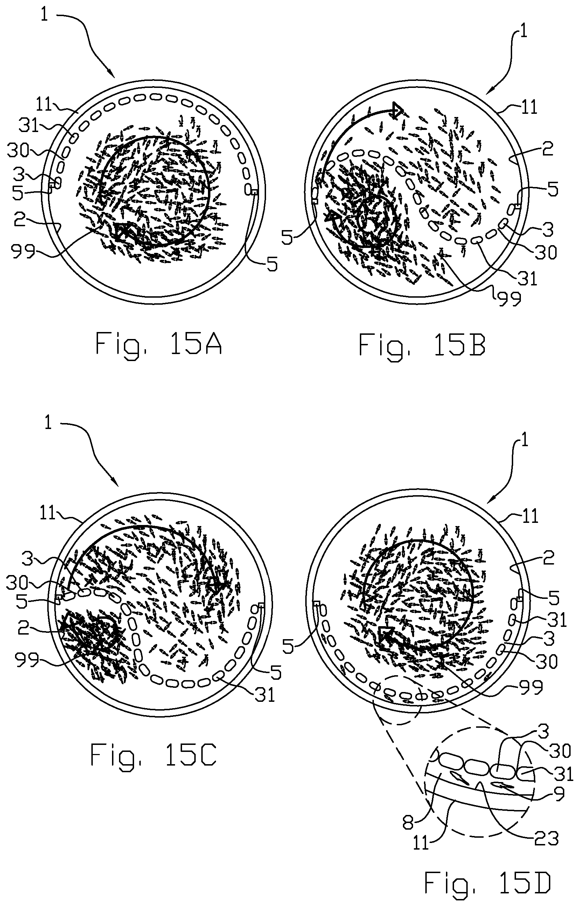

A height He of the side wall 23 is shown larger than a height Hc of the side edge 33 in figure 2. The bottom of 25 the enclosure 2 tapers inwards and downwards towards an apex 29. The bottom edge 35 of the crowding net 3 tapers inwards and downwards towards the apex 29. The bottom portion 36 which forms the false bottom 37, covers about half the area of the bottom's 25 area. The crowding net 3 is attached to the bottom 25 at a portion of the bottom edge 35 at the apex 29. The crowding net 3 is thus in one embodiment only attached to the enclosure along the slit 4 and at a portion of the bottom edge 35. In an alternative embodiment shown in figure 3, the crowding net 3 is attached to the bottom 25 at the whole length of the bottom edge 36 to the bottom 25. In both embodiments the crowding net 3 may be completely turned inside out within the enclosure 2 as seen in figure 15D compared to figure 15A.

In an alternative embodiment shown in figures 6A-B, the crowding net 3 is not fastened to the bottom 25 along any part of the bottom edge 35. The bottom edge 35 and the bottom portion 36 rest on the bottom 25 when the crowding net 3 is positioned along the periphery of the enclosure 2. When the crowding net 3 is displaced towards the mid-position as seen in figure 6A, the bottom edge 35 follows the bottom 25 and more and more of the wall 38 stretches due to the weight rope. In the mid-position, most of the wall 38 is stretched. Further displacement of the crowding net 3 towards the opposite side of the enclosure 2, turns the crowding net 3 inside out due to resistance between the bottom portion 36 and the bottom 25 as more and more of the bottom 36 sweeps the conically shaped bottom 25.

The gate 51 may be provided with sensors (not shown) that measure parameters of interest of the fish that swim through the gate 51. Such sensors may e.g. comprise a fish counter, a device for estimating fish size such as length and weight, a sensor for counting parasites, such as sea lice (*Lepeophtheirus salmonis*), a sensor for detecting wounds, a sensor for identification of fish at an individual level by trait recognition, such as skin dot recognition. The gate 51 may be provided with a treatment device (not shown) such as a laser emitting device for injuring sea lice.

Operation of the crowding net 3 is shown in sequence in figures 15A-D. By experience most fish 9 in a shoal of fish 99 in the enclosure 2 tend to swim in one direction either clockwise or anticlockwise in a plan view as seen in figure 15A. The passage 5 to the left in figures 15A-D is opened and the passage 5 to the right is kept closed due to the fish shoal 99 swimming clockwise. The crowding net 3 is slowly displaced by the displacing means 6, see figures 9 and 10, so that the portion of the crowding net 3 close to the closed passage 5 is displaced the fastest. The top edge 30 forms an S-shape as seen in a plan view in figures 15B and 14C. The available space for the fish shoal 99 in the enclosure 2 becomes more and more restricted as the crowding net 3 is slowly displaced towards the opposite side of the enclosure 2, as seen in figures 15A-14C. The fish 9 become crowded and are forced towards the passage 5. More and more fish 9 will swim through the gate 51 and resume their swimming pattern on the reverse side of the crowding net 3 as seen in figures 15C-14D. The displacing means 6 will finally have displaced the whole crowding net 3 to the opposite side of the enclosure 2 as seen in figure 15D. As shown in an enlarged detail of figure 15D, some fish 9 will be slow to swim through the gate 51. The top edge 30 of the crowding net 3 is formed with a length L that is approximately half of the circumference of the enclosure 2. Preferably the length L is somewhat shorter than half of the circumference of the enclosure 2. Together with the bracket 67 / hinge 68 the crowding net 3 forms a space 8 between the side wall 2 and the crowding net 3. Depending on the length L the space 8 may be formed with a relative narrow gap G1 or a wider gap G2 as seen in figures 4A-B. The gaps G1 and G2 have a sufficient distance for the fish 9 to swim and escape through the gate 51 so that the fish 9 does not become trapped in the space 8 or even squeezed between the crowding net 3 and the side wall 23.

The disclosed embodiments show that the passage 5 is located in the slit 4. In another embodiment (not shown) the passage 5 may be located in the crowding net 3 between the side edges 33. In this embodiment the side edges 33 are fastened directly to the side wall 23 such that the fish 9 cannot pass the side edges 33.

The drawings show enclosures 2 with a side wall 23 and a bottom 25. The skilled person will understand how to modify the crowding net 3 to be suitable for use in a conically shaped enclosure 2. The crowding net 3 may be formed with two side edges 33 that meet in an apex (not shown). The operation of such a crowding net 3 is similar to the operation described above and shown in the figures.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

## Claims

1. A fish pen (1) comprising a buoyancy member (11) and an enclosure (2) for raising fish (9), said buoyancy member (11) encircling said enclosure (2), said enclosure (2) comprises a side wall (23) and possibly a bottom (25), said fish pen (1) comprising a crowding net (3) positioned within the enclosure (2), said crowding net (3) forms a top edge (30), said top edge (30) is provided with buoyancy means (31), two side edges (33) and possibly a bottom edge (35), and a length (L) of the crowding net (3) between the two side edges (33) is larger than a diameter (De) of the enclosure (2),
**characterised in that** the crowding net (3) is fastened to the side wall (23) along the side edges (33).

2. The fish pen (1) according to claim 1, wherein the crowding net (3) is fastened to the bottom (25) at a portion of the bottom edge (35) between the side edges (33).

3. The fish pen (1) according to claim 2, wherein the crowding net (3) is fastened to the bottom (25) at the bottom edge (35) between the side edges (33).

4. The fish pen (1) according to any of claims 2 and 3, wherein the crowding net (3) comprises a bottom portion (36), said bottom portion (36) forms a false bottom (37) above the enclosure's (2) bottom (25).

5. The fish pen (1) according to claim 1, wherein the bottom edge (35) of the crowding net (3) touches the bottom (25).

6. The fish pen (1) according to any of the preceding claims, wherein a slit (4) is formed between at least one of the side edges (33) and the side wall (23).

7. The fish pen (1) according to claim 6, wherein the slit (4) is formed with at least one fixed passage (5) for the fish (9).

8. The fish pen (1) according to claim 6, wherein the slit (4) is formed with at least one displaceable passage (5) for the fish (9).

9. The fish pen (1) according to any of the preceding claims, wherein the fish pen (1) comprises displacing means (6) for displacing the top edge (30) from one side of the enclosure (2) to the opposite side of the enclosure (2).

10. The fish pen (1) according to claim 9, wherein the displacing means (6) comprises at least one pair of opposing winches (61) and a rope (62) between the winches (61), and the rope (62) is connected to the top edge (30) by an attachment (63).

11. The fish pen (1) according to claim 9, wherein the displacing means (6) comprises at least one actuator (65) provided with an actuator arm (66), said actuator arm (66) being connected to the top edge (30) close to the side edge (33).

12. Method for displacing fish (9) from one side of a crowding net (3) to the opposite side of the crowding net (3), wherein the method comprises the steps of:
- providing an enclosure (2) for fish, and a buoyancy member (11) encircling said enclosure;
- providing the crowding net (3) which forms a top edge (30), said top edge (30) is provided with buoyancy means (31), two side edges (33) and possibly a bottom edge (35), and a length (L) of the crowding net (3) between the two side edges (33) is larger than a diameter of the enclosure;
- fastening the crowding net (3) to a side wall of the enclosure along the side edges (33);
- positioning the crowding net (3) along half the circumference of the enclosure;
- slowly displacing the crowding net (3) towards the opposite half circumference of the enclosure by displacing means (6) fastened to a top edge (30) of the crowding net (3) so that the crowding net (3) is turned inside out; and
- letting the fish (9) escape from a slowly reduced water volume at one side of the crowding net (3) to a slowly enlarged water volume at the opposite side of the crowding net (3) through a passage (5).

13. The method according to claim 12, wherein the passage (5) is located in a slit (4) between the side wall and the side edge (33).

14. The method according to claim 12, wherein the passage (5) is located within the crowding net (3) between the side edges (33).

15. The method according to any one of claims 12 to 14, wherein the enclosure is a fish pen (1).

16. The method according to any one of claims 12 to 14, wherein the enclosure is a land-based tank.

## Patentansprüche

1. Fischkäfig (1), der ein Auftriebselement (11) und eine Umschließung (2) zum Züchten von Fisch (9) umfasst, wobei das Auftriebselement (11) die Umschließung (2) umgibt, wobei die Umschließung (2) eine Seitenwand (23) und möglicherweise einen Boden (25) umfasst, wobei der Fischkäfig (1) ein Verdichtungsnetz (3) umfasst, das innerhalb der Umschließung (2) positioniert ist, wobei das Verdichtungsnetz (3) eine Oberkante (30) bildet, wobei die Oberkante (30) mit Auftriebsmitteln (31), zwei Seitenkanten (33) und möglicherweise eine Bodenkante (35) bereitgestellt ist, und eine Länge (L) des Verdichtungsnetzes (3) zwischen den zwei Seitenkanten (33) größer ist als ein Durchmesser (De) der Umschließung (2), **dadurch gekennzeichnet, dass** das Verdichtungsnetz (3) an der Seitenwand (23) entlang der Seitenkanten (33) befestigt ist.

2. Fischkäfig (1) nach Anspruch 1, wobei das Verdichtungsnetz (3) am Boden (25) an einem Abschnitt der Bodenkante (35) zwischen den Seitenkanten (33) befestigt ist.

3. Fischkäfig (1) nach Anspruch 2, wobei das Verdichtungsnetz (3) am Boden (25) an der Bodenkante (35) zwischen den Seitenkanten (33) befestigt ist.

4. Fischkäfig (1) nach einem der Ansprüche 2 und 3, wobei das Verdichtungsnetz (3) einen Bodenabschnitt (36) umfasst, wobei der Bodenabschnitt (36) einen falschen Boden (37) über dem Boden (25) der Umschließung (2) bildet.

5. Fischkäfig (1) nach Anspruch 1, wobei die Bodenkante (35) des Verdichtungsnetzes (3) den Boden (25) berührt.

6. Fischkäfig (1) nach einem der vorstehenden Ansprüche, wobei ein Schlitz (4) zwischen mindestens einer der Seitenkanten (33) und der Seitenwand (23) gebildet ist.

7. Fischkäfig (1) nach Anspruch 6, wobei der Schlitz (4) mit mindestens einem fixen Durchgang (5) für den Fisch (9) gebildet ist.

8. Fischkäfig (1) nach Anspruch 6, wobei der Schlitz (4) mit mindestens einem verschiebbaren Durchgang (5) für den Fisch (9) gebildet ist.

9. Fischkäfig (1) nach einem der vorstehenden Ansprüche, wobei der Fischkäfig (1) Verschiebemittel (6) zum Verschieben der Oberkante (30) von einer Seite der Umschließung (2) zu der gegenüberliegenden Seite der Umschließung (2) umfasst.

10. Fischkäfig (1) nach Anspruch 9, wobei die Verschiebemittel (6) mindestens ein Paar gegenüberliegender Winden (61) und ein Seil (62) zwischen den Winden (61) umfassen und das Seil (62) mit der Oberkante (30) durch eine Befestigung (63) verbunden ist.

11. Fischkäfig (1) nach Anspruch 9, wobei die Verschiebemittel (6) mindestens eine Betätigungsvorrichtung (65) umfassen, die mit einem Betätigungsvorrichtungsarm (66) bereitgestellt ist, wobei der Betätigungsvorrichtungsarm (66) mit der Oberkante (30) nahe an der Seitenkante (33) verbunden ist.

12. Verfahren zum Verschieben von Fisch (9) von einer Seite eines Verdichtungsnetzes (3) zu der gegenüberliegenden Seite des Verdichtungsnetzes (3), wobei das Verfahren die folgenden Schritte umfasst:
- Bereitstellen einer Umschließung (2) für Fisch und eines Auftriebselements (11), das die Umschließung umgibt;
- Bereitstellen des Verdichtungsnetzes (3), das eine Oberkante (30) bildet, wobei die Oberkante (30) mit Auftriebsmitteln (31), zwei Seitenkanten (33) und möglicherweise einer Bodenkante (35) bereitgestellt ist und eine Länge (L) des Verdichtungsnetzes (3) zwischen den zwei Seitenkanten (33) größer ist als ein Durchmesser der Umschließung;
- Befestigen des Verdichtungsnetzes (3) an einer Seitenwand der Umschließung entlang der Seitenkanten (33);
- Positionieren des Verdichtungsnetzes (3) entlang der Hälfte des Umfangs der Umschließung;
- langsames Verschieben des Verdichtungsnetzes (3) zu der gegenüberliegenden Hälfte des Umfangs der Umschließung hin durch die Verschiebemittel (6), die an einer Oberkante (30) des Verdichtungsnetzes (3) so befestigt sind, dass das Verdichtungsnetz (3) von innen nach außen umgestülpt wird; und
- Lassen, dass der Fisch (9) von einem sich langsam verringernden Wasservolumen an einer Seite des Verdichtungsnetzes (3) zu einem sich langsam vergrößernden Wasservolumen an der gegenüberliegenden Seite des Verdichtungsnetzes (3) durch einen Durchgang (5) entkommt.

13. Verfahren nach Anspruch 12, wobei der Durchgang (5) in einem Schlitz (4) zwischen der Seitenwand und der Seitenkante (33) gelegen ist.

14. Verfahren nach Anspruch 12, wobei der Durchgang (5) innerhalb des Verdichtungsnetzes (3) zwischen den Seitenkanten (33) gelegen ist.

15. Verfahren nach einem der Ansprüche 12 bis 14, wobei die Umschließung ein Fischkäfig (1) ist.

16. Verfahren nach einem der Ansprüche 12 bis 14, wobei die Umschließung ein landbasierter Tank ist.

## Revendications

1. Enclos à poissons (1) comprenant un élément de flottabilité (11) et une enceinte (2) pour l'élevage de poissons (9), ledit élément de flottabilité (11) encerclant ladite enceinte (2), ladite enceinte (2) comprend une paroi latérale (23) et éventuellement un fond (25), ledit enclos à poissons (1) comprenant un filet de regroupement (3) positionné à l'intérieur de l'enceinte (2), ledit filet de regroupement (3) forme un bord supérieur (30), ledit bord supérieur (30) est prévu avec des moyens de flottabilité (31), deux bords latéraux (33) et éventuellement un bord inférieur (35), et une longueur (L) du filet de regroupement (3) entre les deux bords latéraux (33) est plus large qu'un diamètre (De) de l'enceinte (2), **caractérisé en ce que** le filet de regroupement (3) est fixé à la paroi latérale (23) le long des bords latéraux (33).

2. Enclos à poissons (1) selon la revendication 1, dans lequel le filet de regroupement (3) est fixé au fond (25) au niveau d'une partie du bord inférieur (35) entre les bords latéraux (33).

3. Enclos à poissons (1) selon la revendication 2, dans lequel le filet de regroupement (3) est fixé au fond (25) au niveau du bord inférieur (35) entre les bords latéraux (33).

4. Enclos à poissons (1) selon l'une quelconque des revendications 2 et 3, dans lequel le filet de regroupement (3) comprend une partie inférieure (36), ladite partie inférieure (36) forme un double fond (37) au-dessus du fond (25) de l'enceinte (2).

5. Enclos à poissons (1) selon la revendication 1, dans lequel le bord inférieur (35) du filet de regroupement (3) touche le fond (25).

6. Enclos à poissons (1) selon l'une quelconque des revendications précédentes, dans lequel une fente (4) est formée entre au moins un des bords latéraux (33) et la paroi latérale (23).

7. Enclos à poissons (1) selon la revendication 6, dans lequel la fente (4) est formée avec au moins un passage fixe (5) pour les poissons (9).

8. Enclos à poissons (1) selon la revendication 6, dans lequel la fente (4) est formée avec au moins un passage déplaçable (5) pour les poissons (9).

9. Enclos à poissons (1) selon l'une quelconque des revendications précédentes, dans lequel l'enclos à poissons (1) comprend des moyens de déplacement (6) pour déplacer le bord supérieur (30) depuis un côté de l'enceinte (2) vers le côté opposé de l'enceinte (2).

10. Enclos à poissons (1) selon la revendication 9, dans lequel les moyens de déplacement (6) comprennent au moins une paire de treuils (61) opposés et une corde (62) entre les treuils (61), et la corde (62) est reliée au bord supérieur (30) par une fixation (63).

11. Enclos à poissons (1) selon la revendication 9, dans lequel les moyens de déplacement (6) comprennent au moins un actionneur (65) prévu avec un bras d'actionneur (66), ledit bras d'actionneur (66) étant relié au bord supérieur (30) à proximité du bord latéral (33).

12. Procédé de déplacement de poissons (9) d'un côté d'un filet de regroupement (3) au côté opposé du filet de regroupement (3), dans lequel le procédé comprend les étapes consistant à :
- fournir une enceinte (2) pour des poissons, et un élément de flottabilité (11) encerclant ladite enceinte ;
- fournir le filet de regroupement (3) qui forme un bord supérieur (30), ledit bord supérieur (30) est prévu avec des moyens de flottabilité (31), deux bords latéraux (33) et éventuellement un bord inférieur (35), et une longueur (L) du filet de regroupement (3) entre les deux bords latéraux (33) est plus grande qu'un diamètre de l'enceinte ;
- fixer le filet de regroupement (3) à une paroi latérale de l'enceinte le long des bords latéraux (33) ;
- positionner le filet de regroupement (3) le long de la moitié de la circonférence de l'enceinte ;
- déplacer lentement le filet de regroupement (3) vers la moitié de circonférence opposée de l'enceinte par des moyens de déplacement (6) fixés à un bord supérieur (30) du filet de regroupement (3) de sorte que le filet de regroupement (3) soit tourné à l'envers ; et
- laisser s'échapper les poissons (9) d'un volume d'eau lentement réduit au niveau d'un côté du filet de regroupement (3) vers un volume d'eau lentement agrandi au niveau du côté opposé du filet de regroupement (3) à travers un passage (5).

13. Procédé selon la revendication 12, dans lequel le passage (5) est situé dans une fente (4) entre la paroi latérale et le bord latéral (33).

14. Procédé selon la revendication 12, dans lequel le passage (5) est situé à l'intérieur du filet de regroupement (3) entre les bords latéraux (33).

15. Procédé selon l'une quelconque des revendications 12 à 14, dans lequel l'enceinte est un enclos à poissons (1).

16. Procédé selon l'une quelconque des revendications 12 à 14, dans lequel l'enceinte est un réservoir terrestre.
